# EUROPEAN PATENT SPECIFICATION

(11) **EP 1 065 359 B1**
(45) Date of publication and mention of the grant of the patent: **29.09.2004**
(21) Application number: 00111195.4
(22) Date of filing: 24.05.2000
(51) Int. Cl.: F02B 75/06, F16F 15/26, F02B 75/00

(54) **Engine device**
Brennkraftmaschine
Moteur à combustion interne

(30) Priority: 24.05.1999 JP 14362299
(43) Date of publication of application: 03.01.2001
(73) Proprietor: YAMAHA HATSUDOKI KABUSHIKI KAISHA, Iwata-shi Shizuoka-ken (JP)
(72) Inventor: Muramatsu, Masahiro, Iwata-shi, Shizuoka-ken (JP)
(74) Representative: Grünecker, Kinkeldey, Stockmair & Schwanhäusser Anwaltssozietät

(56) References cited:
- DE-A1- 3 314 801
- FR-A1- 2 627 803
- GB-A- 2 051 235
- US-A- 4 617 885

## Description

This invention relates to an engine device according to the preamble of independent claim 1.

In engine devices equipped in vehicles, for example, some of engine devices rotatably support on an engine body a crankshaft and a balancer shaft interlocked and rotated with the crankshaft.

The bearing of this balancer shaft is provided with a cylinder block of the engine body and a lower case or a cap, the balancer shaft is assembled between the cylinder block and the lower case or the cap through the bearing, and then the cylinder block and the lower case or the cap are fixed, so that there is a number of parts, and the assembly causes a lot of problems.

An engine device as indicated above is known from prior art document FR 2 627 803 A. Said prior art document teaches an engine device with a crankshaft and a pair of balancer shafts. Each of said balancer shafts is supported within a specific balancer shaft housing by a pair of ball bearings. Said ball bearings are supported within said balancer shaft housing. Said housing is provided with an opening supporting one of said ball bearings, wherein the size of said opening is large enough to entirely introduce the balancer shaft with the weight.

The object of the present invention maid in view of the situation with the prior art described above is to provide an engine device that number of parts assembling the balancer shaft is reduced, and that the assemble of the balancer shaft is easy.

According to the present invention said objective is solved by an engine device having the features of independent claim 1.

Accordingly, since the balancer shafts are insertable from the openings assembling the ball bearings of the balancer shafts to be assembled onto the engine body, number of parts assembling the balancer shaft can be reduced, and the assemble can be easy because the balancer shaft and the ball bearing can be assembled from the same side.

Said engine body is formed to integrate a case part supporting said balancer shaft.

Thus the engine body can be reduced number of parts since the case part supporting the balancer shafts is integrally formed.

According to a preferred embodiment said opening is formed having enough size to allow a weight of said balancer shaft to be inserted.

Thus the openings are formed with enough size to allow the weights of the balancer shafts to be inserted, and the balancer shafts are displaced at the weight to be inserted into the openings, so that the size of the openings can be reduced to the utmost, and the rigidity of the engine body is secured.

According to a preferred embodiment auxiliaries are provided to an engine cover covering said engine body, and one end portion of a side rotatably supported with said ball bearing of said balancer shaft and said auxiliaries are coupled integrally and rotatably.

Since the end portion of the side rotatably supported with the ball bearing of the balancer shaft and the auxiliaries are coupled integrally and rotatably, the auxiliaries can be driven by utilizing the balancer shafts and with compact structure.

According to a preferred embodiment a side rotatably supported with said ball bearing of said balancer shaft and said crankshaft are interlocked through a gear mechanism to be rotatable.

Thus, the ball bearings of the balancer shafts and the gear mechanisms can be assembled from the same side, so that assembly can be made easily.

Other preferred embodiments of the present invention are laid down in further dependent claims.

In the following, the present invention is explained in greater detail with respect to several embodiments thereof in conjunction with the accompanying drawings, wherein:
Fig. 1 is a side view of the front and side part of the vehicle equipped with the engine device;
Fig. 2 is a side view of the engine device;
Fig. 3 is a cross-sectional view of the engine device;
Fig. 4 is a cross-sectional view illustrating the assembly of the balancer shaft; and
Fig. 5 is a side view illustrating the assembly of the balancer shaft.

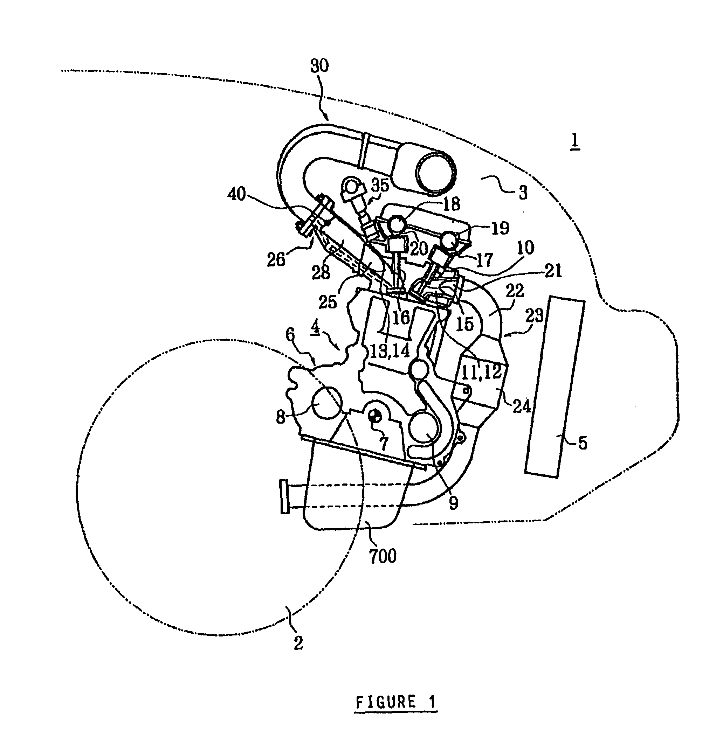

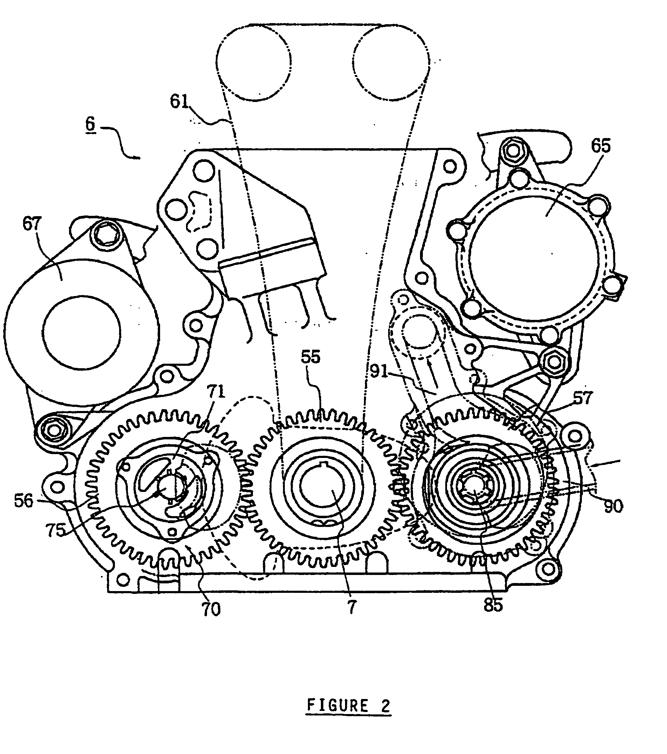

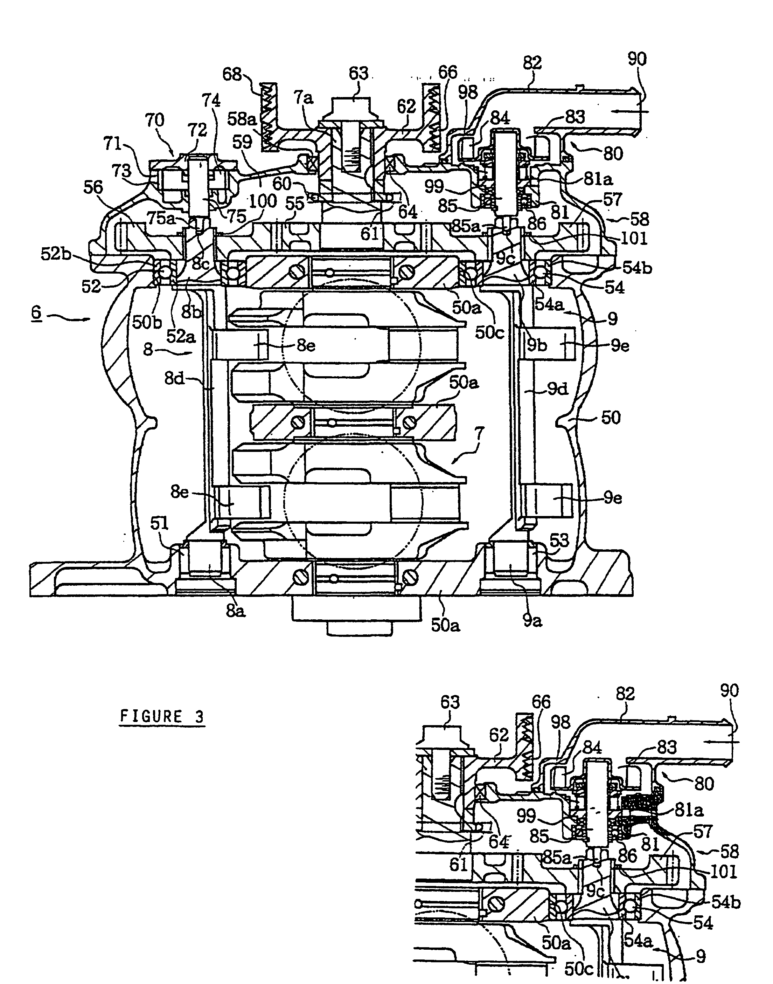

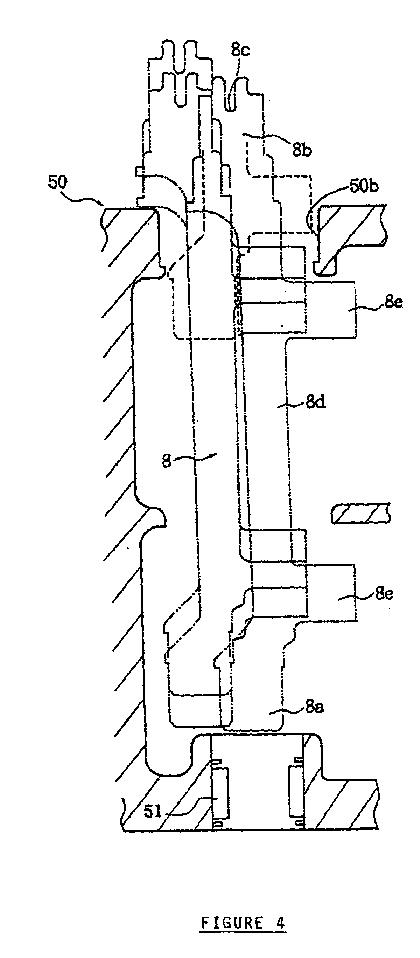

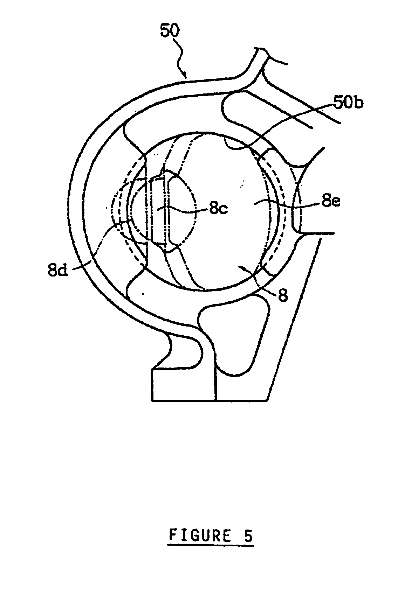

Embodiments of the engine device will now be described with reference to the accompanying drawings wherein: Fig. 1 is a side view of the front and side part of the vehicle equipped with the engine device; Fig. 2 is a side view of the engine device; Fig. 3 is a cross-sectional view of the engine device; Fig. 4 is a cross-sectional view illustrating the assembly of the balancer shaft; Fig. 5 is a side view illustrating the assembly of the balancer shaft.

In the front and side part of a vehicle 1, an engine room 3 is disposed in front of the front wheels 2, an engine 4 is equipped within the engine room 3, and a radiator 5 is located in the front side of the engine 4. This engine 4 is 2-cylinder, 4-stroke engine and disposes an oil pan 700 at the bottom of an engine body 6. A crankshaft 7 is disposed within the engine body 6 along the vehicle's width direction, and balancer shafts 8, 9 are disposed in the front and rear side of the crankshaft along the width direction.

In a cylinder head 10 configuring the engine body 6 are formed branch exhaust passages 11, 12 and branch intake passages 13, 14 for each cylinder. The branch exhaust passages 11, 12 are opened and closed by the corresponding exhaust valve 15 disposed in respectively, and the branch intake passages 13, 14 are opened and closed by the corresponding intake valve 16 disposed in respectively. The exhaust valve 15 and the intake valve 16 are driven by cams 19, 20 disposed on camshafts 17, 18.

The branch exhaust passages 11, 12 are collected, and to this collected exhaust passage 21 is connected an exhaust pipe 22. The exhaust pipe 22 connected to each cylinder is collected, and the collected exhaust pipe 23 passes from the front-side of the engine body 6 through the underneath and extends rearward. In addition, to the exhaust pipe 23 is provided a catalyst 24.

The branch intake passages 13, 14 are collected, and in this collected intake passage 25 is provided a throttle body 26 to the cylinder head 10. The throttle body 26 has an intake passage 28 connecting to the intake passage 25 of each cylinder, and furthermore, an intake manifold 30 is connected to the throttle body 26.

On the cylinder head 10, an injector 35 is disposed. To the throttle body 26 is provided a throttle valve 40 controlling the flow rate of the respective intake passage 28. This throttle valve 40 is controlled in accordance with information of the engine speed and the throttle openings.

In a cylinder block 50 configuring the engine body 6, the crankshaft 7 is rotatably supported on bearings 50a. A balancer shaft 8 is arranged that one end portion 8a is rotatably supported through a needle bearing 51 and another end portion 8b is rotatably supported through a ball bearing 52. A balancer shaft 9 is also arranged in the same manner that one end portion 9a is rotatably supported through a needle bearing 53 and another end portion 9b is rotatably supported through a ball bearing 54. Each of the balancers 8, 9 is inserted from the end portions 8a, 9a of the openings 50b, 50c of the cylinder block 50 and assembled the ball bearings 52, 54 to the openings 50b, 50c.

The balancer shafts 8, 9 have a pair of weights 8e, 9e on shafts 8d, 9d, and the openings 50b, 50c are formed about the size of that the weights 8e, 9e can be inserted into.

Assembling of the balancer shaft 8 is carried out, as shown in Fig. 4, by inserting it from one end portion 8a to the opening 50b, displacing and inserting it at the position of the weight 8e so as to allow the weight 8e to be inserted into the opening 50b, and displacing to assemble it after the insertion of the weights 8e at two positions so as to allow the one end portion 8a to be inserted into the needle bearing 53 affording enough fitting clearance. Then, an inner side 52a of the ball bearing 52 is positioned to assemble to the other end portion 8b of the balancer shaft 8, and an outer side 52b is press fitted into the opening 50b to be secured press-fittingly to the ball bearing 52 having the interferences. That is to say, loose fitting is applied between the ball bearing 52 and the balancer shaft 8, and the interference is provided between the ball bearing 52 and the cylinder block 50, thereby the thrust direction of the balancer shaft 8 is controlled.

The other end portion 8b of the balancer shaft 8 is spline engaged and integrally rotatable with a gear 56 and prevented to drop off by a snap ring 100.

The assembly of the balancer shaft 9 is carried out in the same manner such that, an inner side 54a of the ball bearing 54 is positioned to assemble to the other end portion 9b of the balancer shaft 9, and an outer side 54b is press fitted to be secured into the opening 50b. The other end portion 9b of the balancer shaft 9 is spline engaged and integrally rotatable with a gear 57 and prevented to drop off by a snap ring 101.

A gear 55 is provided to the crankshaft 7, and gears 56, 57 are respectively engaged with the gear 55. The balancer shafts 8, 9 are interlocked to rotate by rotating of the crankshaft 7 through the gear mechanisms such as the gear 55 and the gears 56, 57. The ball bearings 52, 54 of the balancer shafts 8, 9 and the gear mechanisms such as the gear 55 and the gears 56, 57 can be assembled from the same side, so that assembly may be made easily.

In this way, since the openings 50b, 50c assembling the ball bearings 52, 54 onto the engine body 6 are formed to be capable of assembling by inserting the balancer shafts 8, 9, number of parts assembling the balancer shaft can be reduced, compared with the one that the balancer shaft is assembled between the conventional cylinder block and a lower case or a cap through the ball bearing and that the cylinder block and the lower case or the cap are then fixed, and the assemble can be easy because the balancer shaft 8, 9 and the ball bearing 52, 54 can be assembled from the same side.

Furthermore, the openings 50b, 50c are formed with enough size to allow the weights 8e, 9e of the balancer shafts 8, 9 to be inserted, and the balancer shafts 8, 9 are displaced at the weight 8e, 9e to be inserted into the openings 50b, 50c, so that the size of the openings 50b, 50c can be reduced to the utmost, and the rigidity of the cylinder block 50 configuring the engine body 6 is secured.

The engine body 6 can also be reduced the number of parts since the case part supporting the balancer shafts 8, 9 is integrally formed on the cylinder block 50.

One side of the cylinder block 50 is covered with the engine cover 58, so that the engine cover 58 forms a cam chain chamber 59. A cam gear 60 is disposed on the crankshaft 7, and a cam chain 61 is fitted over between the cam gear 60 and a gear disposed on the camshafts 17, 18 (not shown). The camshafts 17, 18 are interlocked to rotate by rotating of the crankshaft 7 through the cam chain 61, and the exhaust valve 15 and the intake valve 16 are opened and closed with the predetermined timing.

An end portion 7a of the crankshaft 7 is protruded from an opening 58a of the engine cover 58, and a driving pulley 62 is mounted on the protruding end portion 7a with a locking bolt 63. Between a shaft 62a of the driving pulley 62 and the opening 58a is sealed with sealing member 64. A driving belt 66 is fitted over between the driving pulley 62 and a steering pump 65 disposed on the front side of the engine, and a driving belt 68 is fitted over between the driving pulley 62 and an alternator 67 disposed on the rear side of the engine.

An oil pump 70 and a water pump 80 are integrally incorporated in the engine cover 58. That is to say, the oil pump 70 is integrally formed so that the pump housing 71 is one part of the engine cover 58, and to assemble the pump housing 71 with a cover housing 72 forms a pump chamber 73. A pump shaft 75 with blades 74 is rotatably supported between the pump housing 71 and the cover housing 72. An engaging protrusion 75a is formed on a tip of the pump shaft 75. An engaging recess 8c is formed on a tip of the balancer shaft 8 positioned opposite to the pump shaft 75. The engaging protrusion 75a of the pump shaft 75 is engaged with the engaging recess 8c of the balancer shaft 8, and the balancer shaft 8 and the pump shaft 75 are coupled integrally and rotatably. Oil is supplied to each part of the engine 4 by rotating of the pump shaft 75.

However, it is also possible to only arrange the water pump 80 integrally with the engine cover 58.

The water pump 80 is also formed integrally so that the pump housing 81 is one part of the engine cover 58, and to assemble the pump housing 81 with a cover housing 82 forms a pump chamber 83. In the pump housing 81, a pump shaft 85 with blades 84 is rotatably supported through the ball bearing 86.

An engaging protrusion 85a is formed on a tip of the pump shaft 85. An engaging recess 9c is formed on a tip of the balancer shaft 9 positioned opposite to the pump shaft 85. The engaging protrusion 85a of the pump shaft 85 is engaged with the engaging recess 9c of the balancer shaft 9, and the balancer shaft 9 and the pump shaft 85 are coupled integrally and rotatably.

The pump housing 81 is protruded into the cam chain chamber 59, and it is configured to be in a small size by that the pump shaft 85 is sealed in this pump housing 81 with a mechanical sealing member 98 and an oil-sealing member 99. The mechanical sealing member 98 and the oil-sealing member 99 shut out the cooling water and oil, and a weep hole 81a is formed between the mechanical sealing member 98 and the oil-sealing member 99.

In the cover housing 82, a cooling water intake passage 90 is provided, and the cooling water from the radiator 5 is supplied to the pump chamber 83 through the cooling water intake passage 90. By driving of the water pump 80, the cooling water is supplied from a cooling water discharging passage 91 formed in the cover housing 82 and the engine cover 58 to each part of the engine.

In the present embodiment, the balancer shafts 8, 9 are rotatably supported in the engine body 6, and the engine cover 58 is rotatably supporting auxiliaries such as the oil pump 70 and the water pump 80. The auxiliaries and the balancer shafts 8, 9 are coupled integrally and rotatably to be a center shaft direct drive system, so that the reduction of the bearing load and size of the bearing become possible. Furthermore, the auxiliaries can be driven by utilizing the balancer shafts 8, 9 and with compact structure.

Since the end portion of the crankshaft 7 is protruded from the engine cover 58 and sealed, and rotatably supports the auxiliaries such as the oil pump 70 and the water pump 80, the positioning between the crankshaft 7 and the shaft of the oil pump 70 and the water pump 80 can be carried out with ease and a high degree of accuracy.

Furthermore, since the engine cover 58 incorporates integrally the auxiliaries such as the oil pump 70 and the water pump 80, number of parts for the assembly of the auxiliaries can be reduced, and the reduction of the sealing surface area can be intended. It is also intended to reduce number of parts built in the oil pump 70 and the water pump 80 and to reduce the sealing surface area, and the reduction of the bearing load and size of the bearing become possible with the center shaft direct drive system.

As described set forth according to one embodiment of the invention, since the balancer shafts are inserted from the openings assembling the ball bearings of the balancer shafts to be assembled onto the engine body, number of parts assembling the balancer shaft can be reduced, and the assemble can be easy because the balancer shaft and the ball bearing can be assembled from the same side.

According to the embodiment, the openings are formed as enough size to allow the weights of the balancer shafts to be inserted, and the balancer shafts are displaced at the weight to be inserted into the openings, so that the size of the openings can be reduced to the utmost, and the rigidity of the engine body is secured.

According to the embodiment, the engine body can be reduced number of parts since the case part supporting the balancer shafts is integrally formed.

According to the embodiment, since the end portion of the side rotatably supported with the ball bearing of the balancer shaft and the auxiliaries are coupled integrally and rotatably, the auxiliaries can be driven by utilizing the balancer shafts and with compact structure.

According to the embodiment, the ball bearings of the balancer shafts and the gear mechanisms can be assembled from the same side, so that assembly can be made easily.

## Claims

1. An engine device comprising:
an engine body (6) rotatably supporting a crankshaft (7) and at least one balancer shaft (8,9) interlocked and rotated with the crankshaft (7), both ends (8a,8b,9a,9b) of said balancer shaft (8,9) are rotatably supported to said engine body (6) through bearings (51,52,53,54), one of the bearings is comprised of a ball bearing (52,54); and
an opening (50b, 50c) supporting said ball bearing (52,54) in said engine body (6), said opening (50b, 50c) is formed to be capable for inserting said balancer shaft (8,9) through said opening (50b, 50c) into the engine body (6), **characterized in that** integrally with said engine body (6) a case part is formed supporting said balancer shaft (8,9) through the bearings (51,52,53,54), and said balancer shaft (8,9) is inserted through said opening (50b, 50c) into the engine body (6).

2. An engine device according to claim 1, **characterized in that** said opening (50b,50c) is formed with enough size to allow a weight of said balancer shaft (8,9) to be inserted.

3. An engine device according to claim 1 or 2, **characterized in that** auxiliaries (70,80) are provided to an engine cover (58) covering said engine body (6), and one end portion (8b,9b) of a side rotatably supported with said ball bearing (52,54) of said balancer shaft (8,9) and said auxiliaries (70,80) are coupled integrally and rotatably.

4. An engine device according to at least one of the preceding claims 1 to 3, **characterized in that** a side rotatably supported with said ball bearing (52,54) of said balancer shaft (8,9) and said crankshaft (7) are interlocked through a gear mechanism to be rotatable.

5. An engine device according to at least one of the preceding claims 1 to 4, **characterized in that** a cylinder block (50) forming the engine body (6) rotatably supports the crankshaft by bearings (50a), that the other ends (8a,9a) of the balancer shafts (8,9) are rotatably supported by needle bearings (51,53) and that each of said balancer shafts (8,9) being insertable with the other end portions (8a,9a) through openings (50b,50c) of the cylinder block (50), whereas the ball bearings (52,54) are assembled at the other end portions (8b,8c) in the opening (50b,50c) with said ball bearings (52,54).

6. An engine device (1) according to at least one of the preceding claims 1 to 5, **characterized in that** there is provided a loose fitting between one ball bearing (52) and one balancer shaft (8) and that the interference is provided between the ball bearing (52) and the cylinder block (50) to control the thrust direction of the balancer shaft (8).

7. An engine device (1) according to at least one of the preceding claims 1 to 6, **characterized in that** engine auxiliaries are integrally formed with an engine cover (58).

8. An engine device (1) according to claim 7, **characterized in that** an oil pump (70) and/or a water pump (80) are integrally formed with an engine cover (58).

9. An engine device (1) according to claim 7 or 8, **characterized in that** said auxiliaries and the balancer shafts (8,9) are coupled integrally and rotatably to form a center shaft direct drive system.

## Patentansprüche

1. Motorvorrichtung, die aufweist:
einen Motorkörper (6), der eine Kurbelwelle (7) drehbar lagert und zumindest einer Ausgleichswelle (8, 9), die mit der Kurbelwelle (7) gekoppelt und gedreht wird, wobei beide Enden (6a, 8b, 9a, 9b) der Ausgleichswelle (8, 9) an dem Motorkörper (6) durch Lager (51, 52, 53, 54) drehbar gelagert sind, wobei eines der Lager ein Kugellager (52, 54) ist; und
eine Öffnung (50b, 50c), die das Kugellager (52, 54) in dem Motorkörper (6) lagert, wobei die Öffnung (50b, 50c) gebildet ist, um durch die Öffnung (50b, 50c9 hindurch die Ausgleichswelle (8, 9) in den Motorkörper (6) einzusetzen, **dadurch gekennzeichnet, dass** einstückig mit dem Motorkörper (6) ein Gehäuseteil gebildet ist, das die Ausgleichswelle (8, 9) durch die Lager (51, 52, 53, 54) lagert, und
die Ausgleichswelle (8, 9) durch die Öffnung (50b, 50c) in den Motorkörper (6) eingesetzt ist.

2. Motorvorrichtung nach Anspruch 1, **dadurch gekennzeichnet, dass** die Öffnung (50b, 50c) mit einer ausreichenden Größe gebildet ist, um einem Gewicht der Ausgleichswelle (8, 9) zu gestatten, eingesetzt zu werden.

3. Motorvorrichtung nach Anspruch 1 oder 2, **dadurch gekennzeichnet, dass** Hilfseinrichtungen (70, 80) an einer Motorabdeckung (58) vorgesehen sind, die den Motorkörper (6) abdeckt, und ein Endabschnitt (8b, 9b) einer Seite der Ausgleichswelle (8, 9), die mit Kugellagern (52, 54) drehbar gelagert ist, und die Hilfseinrichtungen (70, 80) integral und drehbar gekuppelt sind.

4. Motorvorrichtung nach zumindest einem der vorhergehenden Ansprüche 1 bis 3, **dadurch gekennzeichnet, dass** eine Seite der Ausgleichswelle (8, 9), die mit dem Kugellager (52, 54) drehbar gelagert ist, und die Kurbelwelle (7) durch eine Getriebevorrichtung gekoppelt sind, um drehbar zu sein.

5. Motorvorrichtung nach zumindest einem der vorhergehenden Ansprüche 1 bis 4, **dadurch gekennzeichnet, dass** ein Zylinderblock (50), der den Motorkörper (6) bildet, die Kurbelwelle durch Lager (50a) drehbar lagert, dass die anderen Enden (8a, 9a) der Ausgleichswellen (8, 9) durch Nadellager (51, 53) drehbar gelagert sind und dass jede der Ausgleichswellen (8, 9) mit dem jeweils anderen Endabschnitt (8a, 9a) durch die Öffnung (50b, 50c) des Zylinderblocks (50) einsetzbar ist, während die Kugellager (52, 54) an den anderen Endabschnitten (8b, 8c) in der Öffnung (50b, 50c) mit den Kugellagern (52, 54) zusammengebaut sind.

6. Motorvorrichtung nach zumindest einem der vorhergehenden Ansprüche 1 bis 5, **dadurch gekennzeichnet, dass** eine lose Passung zwischen einem Kugellager (52) und einer Ausgleichswelle (8) vorgesehen ist und dass die Interferenz zwischen dem Kugellager (52) und dem Zylinderblock (50) vorgesehen ist, um die Druckrichtung der Ausgleichswelle (8) zu steuern.

7. Motorvorrichtung nach zumindest einem der vorhergehenden Ansprüche 1 bis 6, **dadurch gekennzeichnet, dass** die Motorhilfseinrichtungen mit einer Motorabdeckung (58) integral ausgebildet sind.

8. Motorvorrichtung nach Anspruch 7, **dadurch gekennzeichnet, dass** eine Ölpumpe (70) und / oder eine Wasserpumpe (80) mit einer Motorabdeckung (58) integral gebildet ist.

9. Motorvorrichtung nach Anspruch 7 oder 8, **dadurch gekennzeichnet, dass** die Hilfseinrichtungen und die Ausgleichswellen (8, 9) integral gekuppelt und drehbar sind, um ein Mittelwellen- Direktantriebssystem zu bilden.

## Revendications

1. Moteur à combustion interne :
un corps de moteur (6) supportant de façon rotative un vilebrequin (7) et au moins un arbre d'équilibrage (8, 9) interverrouillé et en rotation avec le vilebrequin (7), les deux extrémités (8a, 8b, 9a, 9b) dudit arbre d'équilibrage (8, 9) sont supportées de façon rotative par ledit corps de moteur (6) par l'intermédiaire de paliers (51, 52, 53, 54), un des paliers est composé d'un palier à billes (52, 54); et
une ouverture (50b, 50c) supportant ledit palier à billes (52, 54) dans ledit corps de moteur (6), ladite ouverture (50b, 50c) est formée pour être capable d'insérer ledit arbre d'équilibrage (8, 9) à travers ladite ouverture (50b, 50c) dans le corps de moteur (6), **caractérisé en ce que**
ledit corps de moteur (6) est formé de façon intégrale avec une partie de carter supportant ledit arbre d'équilibrage (8, 9) par l'intermédiaire des paliers (51, 52, 53, 54), et ledit arbre d'équilibrage (8, 9) est inséré à travers ladite ouverture (50b, 50c) dans le corps de moteur (6).

2. Moteur à combustion interne selon la revendication 1, **caractérisé en ce que** ladite ouverture (50b, 50c) est formée avec une taille suffisante pour permettre à un poids dudit arbre d'équilibrage (8, 9) d'être inséré.

3. Moteur à combustion interne de moteur selon la revendication 1 ou 2, caract érisé en ce que des auxiliaires (70, 80) sont pr évus sur un couvercle de moteur (58) recouvrant ledit corps de moteur (6), et une partie d'extrémité (8b, 9b) d'un côté supporté de façon rotative avec ledit palier à billes (52, 54) dudit arbre d'équilibrage (8, 9) et lesdits auxiliaires (70, 80) sont couplés de façon intégrale et de façon rotative.

4. Moteur à combustion interne selon au moins une des revendications précédentes 1 à 3, **caractérisé en ce qu'**un côté supporté de façon rotative avec ledit palier à billes (52, 54) dudit arbre d'équilibrage (8, 9) et ledit vilebrequin (7) sont interverrouillés par l'intermédiaire d'un mécanisme d'engrenage pour être rotatifs.

5. Moteur à combustion interne selon au moins une des revendications précédentes 1 à 4, **caractérisé en ce qu'**un bloc cylindres (50) formant le corps de moteur (6) supporte de façon rotative le vilebrequin par l'intermédiaire de paliers (50a), que les autres extrémités (8a, 9a) des arbr es d'équilibrage (8, 9) sont supportées de façon rotative par des paliers à aiguilles (51, 53) et que chac un desdits arbres d'équilibrage (8, 9) puisse être inséré avec les autres parties d'extrémité (8a, 9a) à travers les ouvertures (50b, 50c) du bloc cyl indres (50), alors que les paliers à billes (52, 54) sont assemblés au niveau des autres parties d'extrémité (8b, 8c) dans l'ouverture (50b, 50c) avec lesdits paliers à billes (52, 54).

6. Moteur à combustion interne (1) selon au moins une des revendications précédentes 1 à 5, **caractérisé en ce qu'**il est prévu un ajustement libre entre un palier à billes (52) et un arbre d'équilibrage (8) et que le serrage est prévu entre le palier à billes (52) et le bloc cylindres (50) pour contrôler la direction de poussée de l'arbre d'équilibrage (8).

7. Moteur à combustion interne (1) selon au moins une des revendications précédentes 1 à 6, **caractérisé en ce que** des auxiliaires de moteur sont formés de façon intégrale avec un couvercle de moteur (58).

8. Moteur à combustion interne (1) selon la revendication 7, **caractérisé en ce qu'**une pompe à huile (70) et/ou une pompe à eau (80) sont formées de façon intégrale avec un couvercle de moteur (58).

9. Moteur à combustion interne (1) selon la revendication 7 ou 8, **caractérisé en ce que** lesdits auxiliaires et les arbres d'équilibrage (8, 9) sont couplés de façon intégrale et de façon rotative pour former un système d'entraînement direct d'arbre central.
